# EUROPEAN PATENT APPLICATION

(11) **EP 2 327 889 A1**
(43) Date of publication of application: **01.06.2011**
(21) Application number: 09014700.0
(22) Date of filing: 25.11.2009
(51) Int. Cl.: F16B 39/10

(54) **Bolt retainer**

(71) Applicant: SIEMENS AKTIENGESELLSCHAFT, 80333 München (DE)
(72) Inventor: Laursen, Christian, 8723 Loesning (DK)

(57) **Abstract**

The invention describes a retainer (1, 3) for limiting the rotational movement of a polygonal bolt part (20, 21, 22) during tightening of a bolt (2), which bolt part (20, 21, 22) comprises a bolthead or a nut, which retainer (1, 3) comprises a cavity (10, 30) dimensioned to accommodate the bolt part (20, 21, 22), which cavity (10, 30) is characterized by side walls comprising a number of crests (11, 31) extending into the cavity (10, 30) and corresponding to side faces of the bolt part (20, 21, 22) such that the rotational movement of the bolt part (20, 21, 22) positioned in the cavity (10, 30) is limited by contact made between at least one side face of the bolt part (20, 21, 22) and a corresponding crest (11, 31) of the cavity (10, 30). The invention also describes a method of limiting the rotational movement of a polygonal bolt part (20, 21, 22) during tightening of a bolt (2), a method of manufacturing such a retainer, and the use of such a retainer.

## Description

### FIELD OF THE INVENTION

The invention describes a retainer for limiting the rotational movement of a bolt part during tightening of a bolt, and a method of limiting the rotational movement of a bolt part.

### BACKGROUND OF THE INVENTION

When tightening a bolt fastener, a turning moment is applied to the nut while the bolthead is held, or vice versa, in order to achieve a bolt preload. This turning moment or torque causes the opposite nut or bolthead to turn instead of actually tightening the bolt. Therefore, a counter-force must be applied to hold the bolthead while the nut is being turned to tighten the fastener (in the following, a bolthead is assumed to be held while the nut is being turned, but the skilled person will know that the nut can equally be held while the bolthead is turned). In the simple example of a small bolt, one spanner can be used to fix the bolthead while a second spanner is used to turn the nut. This is easy to do when both bolthead and nut are freely accessible. Should the bolthead not be accessible, it may be held using an appropriately shaped retainer which is left in place on the bolthead after tightening.

Bolts which are used to connect heavy parts and which must be capable of withstanding large forces are dimensioned accordingly. Such large bolts are required in numerous applications, for example in the construction industry, bridge-building, wind turbines, etc., and may be dimensioned in the order of M20 upwards (according to the ISO metric standards for fasteners). In wind turbine construction, for example, large bolts are required for connecting the individual tower sections, the blade bearing to the hub, the hub to the main shaft, and the hub to the spinner plate. These bolts usually have hexagonal boltheads and nuts with flat side faces which can be grasped or held by a wrench, spanner, or other such tool. In tightening such large bolts, a retaining technique of some kind must be applied to hold either the nut or the bolthead while the other part is grasped and turned to tighten.

In the case where the bolthead can be accessed during tightening, a retainer tool can be used. During tightening, however, the tool can jam owing to the large forces involved. Furthermore, the tool must avail of a release mechanism which must be activated to release the tool. This procedure is slow, and the operator is at risk of injury as the tool turns and comes into contact with the neighbouring bolts.

For the case where the boltheads are not accessible during tightening, a retainer may be used to fix boltheads for two or more neighbouring bolts. In the case of large bolts, a retainer is also correspondingly large. Generally, the retainers are left in place on the boltheads. The material and tooling costs, together with the large quantities required, can make the retainers a considerable cost factor in construction projects. Different types of retainers are currently in use. For example, a double-nut retainer has a hole for each of two bolts and a machined rectangular groove for a bolt part, which can be the bolthead or the nut. The machined groove accommodates the bolt part so that this cannot rotate during tightening. In the connection procedure, the bolts are placed into the holes of the retainer and then into the holes of the parts to be connected. The nuts can then be turned, for example, while the boltheads are fixed in place. However, one disadvantage of this solution is that it is not possible to use a hardened washer underneath the bolthead, necessary for distribution of the forces between the bolthead and the parts being connected. As a result, the force under the bolthead can exceed the compressive yield strength of the connected parts, and the bolthead can become partially embedded in the retainer during the tightening process, resulting in a highly undesirable loss of bolt preload. Further disadvantages of this type of retainer are that they are time-consuming in assembly, as well as being expensive to manufacture.

In another approach, a multiple-nut retainer is used in the manner of a 'lid' to cover and fix in place a number of neighbouring boltheads. This type of retainer has a series of machined rectangular cavities, each of which can accommodate a bolthead. While this solution allows the used of a hardened washer underneath the bolthead, it is exceedingly time-consuming to apply, since each bolthead in the series must be positioned carefully to allow the 'lid' to be put in place.

Furthermore, the effect of the known double-nut and multiple-nut retainers is given only by two corners or edges of each bolt part reacting against two surfaces of the corresponding machined groove or cavity when the bolt is tightened. The actual "contact area" arising as a result is therefore quite small. These retainers must therefore be made of a suitably hard material such as hardened steel, and are usually dimensioned to accommodate the entire height of the bolthead or nut, so that a relatively large amount of material is required. Even so, in situations where large forces are exerted on the connection, for example during high winds, impact or vibration, an embedding of the bolt part into the retainer can occur, and the loss of bolt preload means that such contacts may not satisfy the stability requirements of the connection.

It is therefore an object of the invention to provide a retainer that overcomes the problems mentioned above.

### SUMMARY OF THE INVENTION

The object of the invention is achieved by the retainer according to claim 1 for limiting the rotational movement of a bolt part during tightening or loosening of a bolt, by the method of claim 12 of limiting the rotational movement of a bolt part, by the method according to claim 13 of manufacturing such a retainer, and by the use of such a retainer according to claim 14.

The retainer according to the invention comprises a cavity dimensioned to accommodate a bolt part, which bolt part can be either a bolthead or a nut, and the cavity is characterized by side walls comprising a number of crests extending into the cavity and corresponding to side faces of the bolt part such that the rotational movement of the bolt part positioned in the cavity is limited by contact made between at least one side face of the bolt part and a corresponding crest on a cavity side wall.

A 'crest' is to be understood to be any raised structural element located on a side wall of the cavity, and the term 'raised' in this context means that the crest intrudes or protrudes into the cavity from the cavity side wall. A crest can comprise any bump or other protuberance, and can intrude into the cavity to any suitable extent relative to the cavity side walls, for example a crest can be only slightly raised, or can extend abruptly into the cavity.

An obvious advantage of the retainer according to the invention is that the retainer can easily be positioned over a bolt part, for example over the bolthead. The bolthead therefore does not need to be precisely aligned prior to positioning the retainer. This saves time in assembly, particularly when many bolts need to be tightened. Another major advantage of the retainer according to the invention is that it is very economical compared to known retainers. Firstly, the retaining effect is given by contact between the essentially flat side faces of the bolt part and the crests of the retainer. This contact area is much larger than that obtained using the prior art retainers, which rely on a contact between an outer edge (between adjacent side faces) of the bolt part and a retainer side wall. For this reason, the retainer according to the invention can be manufactured using less material than a comparable prior art retainer. Secondly, the inventive cavity design offers a certain amount of freedom or play, so that the retainer according to the invention does not require precise tooling.

The method according to the invention of limiting the rotational movement of a bolt part comprises retaining the bolt part in a cavity of a retainer, which cavity is characterized by side walls comprising a number of crests extending into the cavity and corresponding to side faces of the bolt part such that the rotational movement of the bolt part positioned in the cavity is limited by contact made between at least one side face of the bolt part and a corresponding crest on a cavity side wall.

The method according to the invention of manufacturing such a retainer for limiting the rotational movement of a bolt part during tightening or loosening of a bolt, which bolt part comprises a bolthead or a nut, comprises processing a workpiece to create a cavity to accommodate the bolt part, which cavity is characterized by side walls comprising a number of crests extending into the cavity and corresponding to side faces of the bolt part such that, when the bolt part is contained in the cavity and the bolt is tightened, the rotational movement of the bolt part is limited by contact made between at least one side face of the bolt part and a corresponding crest of the cavity.

According to the invention, such a retainer is used for tightening or loosening a bolt with a size of at least M20, preferably for connecting components for a wind turbine.

Particularly advantageous embodiments and features of the invention are given by the dependent claims, as revealed in the following description.

The term 'bolt part', as already indicated above, can refer to either a bolthead or a nut. One of the most common bolt fasteners comprises a metal cap screw with a bolthead and a matching nut. A bolt can be tightened or loosened by turning either one of the bolthead or nut while the other is held or 'retained'. The retainer according to the invention can be used to hold either a bolthead or a nut. Should the retainer be used to hold a nut, the skilled person will be aware that the retainer would be realized to permit the bolt to extend through the retainer. In the following, for the sake of simplicity but without restricting the invention in any way, the terms 'bolt part' and 'bolthead' may be used interchangeably. The inventive retainer can be left in place after tightening the bolt(s) which it retained, or it may be removed. Also, while reference may be more often made in the following to the use of the inventive retainer in tightening a bolt, it is to be understood that the same applies (in reverse) to loosening.

The retainer according to the invention can be realized to confine or hold any type of bolthead or nut. Even an elliptical bolt part could be retained by a cavity with appropriately positioned crests. However, since the shapes and dimensions of boltheads and nuts are standardized, the retainer according to the invention preferably comprises a cavity dimensioned to accommodate a bolt part with an equiangular cyclic polygonal shape. Most preferably, the retainer according to the invention comprises a cavity dimensioned to accommodate a hexagonal bolt part, since this is the most common shape used in boltheads and nuts. Evidently, the retainer according to the invention can equally well comprise a cavity dimensioned to accommodate a bolt part, with any proprietary shape.

The cavity could have any shape which is suitable for containing the bolt part which is to be constrained. In a particularly preferred embodiment of the invention, the shape of the cavity is derived from an enlarged outline of the bolt part. To this end, when considering the dimensions of the cavity to be made for a certain bolt part, the shape of the bolt part can be taken as a basis. This shape, when enlarged somewhat, can then comprise a basis for the shape of the cavity. The final cavity outline can be arrived at by altering the sides of the basic outline shape to add a desired number of crests facing 'inwards' i.e. into the interior of the shape, and by choosing an appropriate size for the crests. Evidently, the outline or overall shape of the cavity, owing to the crests, is different from the outline of the bolt part upon which it is based.

A retainer may be used to hold a bolt part in place which the bolt is being tightened or opened. The retaining effect in the retainer according to the invention is given, as already explained, by the contacts between the crests and side faces of the bolt part being held. Therefore, the shape of the crests can determine the extent of the contact area. In a preferred embodiment of the invention, therefore, the crest comprises a symmetrical shape. For example, a crest can be centred on a (virtual) 'side' of the cavity, and can be symmetrical about a central axis bisecting the area of the crest. In this way, the retainer can be used to equally good effect in tightening or loosening the bolt fastener.

As already outlined above, the retaining effect is given by contact made between side faces of the bolt part and the crests in the cavity. Therefore, in a particularly preferred embodiment of the invention, the retainer comprises a symmetrical arrangement of crests about the side walls of a cavity. For example, the cavity can comprise two crests positioned on opposite sides of the cavity. When the bolt is tightened, contact is made on opposite sides of the bolthead between two bolthead side faces and the crests. In this way, the retaining effect is favourably high. Evidently, an essentially hexagonal cavity (for a hexagonal bolthead or nut) can comprise six crests, so that, when the bolt is tightened, contact is made between each bolthead side face and the crests. With this realization of the retainer according to the invention, the retaining effect is favourably maximized.

In the retainer according to the invention, the overall 'shape' of the cavity is larger than the cross-sectional area of the bolt part, as mentioned above, and the crests in the cavity are dimensioned and positioned to allow easy placement of the retainer relative to the bolt part. When the bolt is tightened, therefore, the bolt part held in the cavity can rotate by a certain amount. If the crests are given a relatively 'flat' shape, the bolt part is given a correspondingly greater degree of rotational freedom. However, it is desirable to limit the amount by which the bolt part can rotate. Therefore, in a further particularly preferred embodiment of the inventive retainer, the cavity and the crests along the cavity side walls are dimensioned to limit the rotational movement of a bolt part to a maximum rotation of up to 8 degrees, more preferably up to 5 degrees, most preferably up to 3 degrees. This can be achieved by simply designing the crests to intrude more steeply into the cavity. Furthermore, the degree of rotational freedom may be influenced by the overall width of a crest. In the case of an essentially hexagonal cavity, for example, a crest can be in the form of a 'bump' placed about midway along a 'side' of the hexagon. Alternatively, the crest can comprise a more gentle 'swell' along an entire side of the essentially hexagonal outline. In the latter case, the fit between bolt part and cavity can be more 'snug'.

Of course, the retainer according to the invention can be realized for use with a single bolt. In such a realization, the retainer can be realized to be fixed in some way to one of the parts to be connected, for example by fitting into a corresponding opening so that the retainer does not rotate with the bolt part while the bolt is being tightened.

In most construction applications, a series of neighbouring bolts are used to connect adjoining parts. Therefore, in a particularly preferred embodiment of the invention, the retainer comprises a plurality of cavities for accommodating a plurality of bolt parts. During tightening of the bolts, the retainer is prevented from rotating, since it is constrained by at least two bolts.

The cavity in a retainer according to the invention can be a suitably shaped depression in the body of the retainer for accommodating the bolt part. Such a retainer can be placed over one or more bolt parts in the manner of a 'lid'. To ensure that the retainer lies stably on the bolt parts to be constrained, the material thickness of the retainer is then preferably comparable to the height of the bolt parts. In a more economical realization, however, the cavity can be a through-opening in the retainer. In such a realization, the material thickness of the retainer can be a fraction of the height of the bolt parts to be constrained, since a turning motion of one of the bolt parts during tightening will not result in the retainer being lifted off a neighbouring bolt part.

As already indicated above, the design of the cavity of the retainer according to the invention means that the retaining effect is given by the favourable contact between side faces of the bolt part and the crests. Since these face/face contacts are much more effective than the edge/face contacts obtained using the prior art retainers, the retainer according to the invention does not have to be made of a hard metal such as S355 steel strip. Therefore, in a particularly preferred embodiment of the invention, the retainer is manufactured of sheet metal, which has the advantages of being economical as well as easy to handle.

The retainer according to the invention could be realized as a metal strip, for example a strip of sheet metal, with machined depressions for the cavities, for example if it to be used only for constraining boltheads. However, since the cavity design of the inventive retainer actually allows certain intolerances in crest placement, such costly tooling steps are not required. Therefore, in a further particularly preferred embodiment of the retainer according to the invention, a cavity can simply be made by means of a punch. Alternatively, the cavity can be created in a thermal cutting process, for example in a laser cutting process, in which the contour of the cavity is simply cut out of the metal strip.

The retainer according to the invention can be used to advantage in construction purposes, since its ease of manufacture and low cost make it suitable for use with large bolted fasteners of which only one bolt end can be accessed for tightening or loosening. Therefore, in a further preferred embodiment of the invention, the cavity of the retainer is dimensioned to accommodate a construction industry bolt part with a size of at least M20. Preferably, the retainer according o the invention is used to connect parts in a wind turbine, for example for connecting circular tower sections of a steel tower, for connecting parts of the drive train, for connecting the yaw ring, etc.

Other objects and features of the present invention will become apparent from the following detailed descriptions considered in conjunction with the accompanying drawings. It is to be understood, however, that the drawings are designed solely for the purposes of illustration and not as a definition of the limits of the invention.

### BRIEF DESCRIPTION OF THE DRAWINGS

- Fig. 1: shows a prior art double-nut retainer.
- Fig. 2: shows a prior art multiple-nut retainer;
- Fig. 3: shows a first embodiment of a retainer according to the invention;
- Fig. 4: shows a view into the cavity of the retainer of Fig. 3;
- Fig. 5: shows a bolthead placed in a cavity of the retainer of Fig. 3 before tightening of the bolt;
- Fig. 6: shows the bolthead of Fig. 4 after tightening of the bolt;
- Fig. 7: shows an embodiment of the retainer according to the invention with a plurality of cavities;
- Fig. 8: shows a side view of the retainer of Fig. 6 in place over a plurality of bolt parts;
- Fig. 9: shows a third embodiment of the retainer according to the invention;
- Fig. 10: shows the retainer of Fig. 9 in place over a square bolt part.

In the drawings, like reference numbers refer to like objects throughout. Objects in the diagrams are not necessarily drawn to scale.

### DETAILED DESCRIPTION OF THE EMBODIMENTS

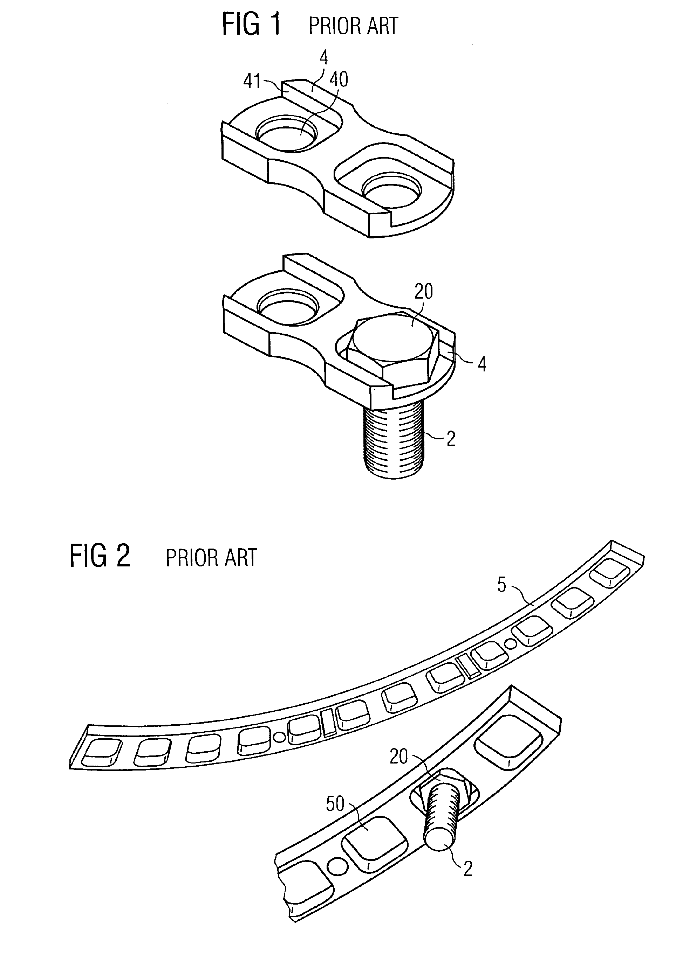

Fig. 1 shows a prior art double-nut retainer 4, which can be used to allow tightening of two neighbouring bolts. The top part of the diagram shows the retainer 4 with round openings 40 for the bolt, and recesses 41 to accommodate the part to be held, which can be either a bolthead or a nut. In this prior art double-nut retainer, a bolt 2 is inserted through the hole 40 as shown in the lower part of the diagram, and then through the parts to be connected. The nut can then be placed on the bolt and turned to tighten. During turning, the parallel sides of the recess 41 prevent the bolthead from turning, and the retaining effect is given by an edge (between two side faces) of the bolthead being forced against the corresponding side wall of the recess. As mentioned in the introduction, placement of this type of retainer is awkward and time-consuming, and it is not possible to use a hardened washer between the bolthead and the part to be connected.

Fig. 2 shows a prior art multiple-nut retainer 5 which can be used to simultaneously hold or fix more than two boltheads. The diagram shows the retainer 5 with a curved shape specifically dimensioned for connecting curved parts, for example the circular tower sections of a wind turbine. Here, a bolthead 20 of a bolt 2 is contained by a machined rectangular recess 50, as shown in the lower part of the diagram, and the retainer 5 is placed as a sort of 'lid' over the boltheads of bolts which have previously been dropped into holes in the parts to be connected. In order to fulfil its function as a retainer, i.e. to hold the boltheads firmly in place, the rectangular recesses 50 may not be much larger than the boltheads 20. While this type of retainer 5 allows the use of a hardened washer under each bolthead 20, its placement is decidedly awkward, since each bolthead 20 must be very precisely positioned before lowering the retainer 5 into place. Furthermore, the amount of material used and the necessity for precise tooling means that this retainer 5 is associated with high costs.

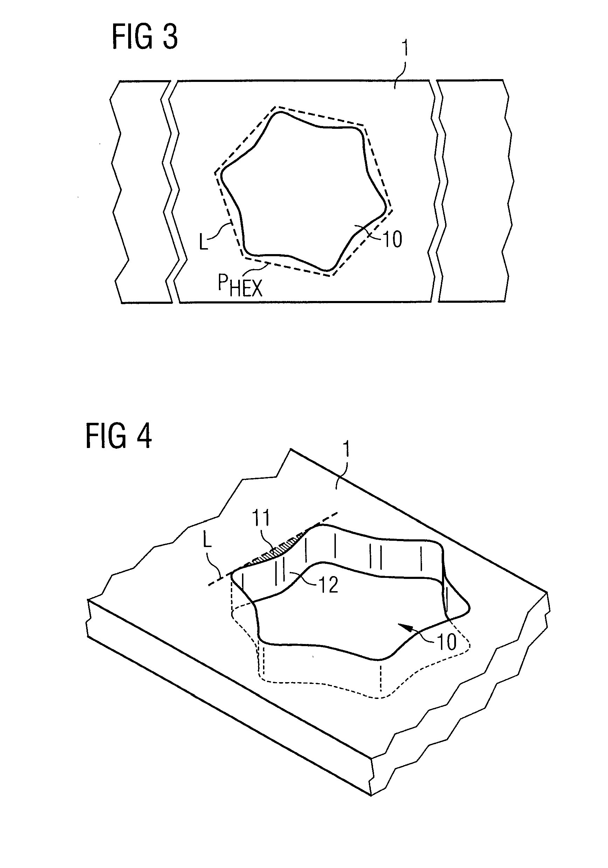

Fig. 3 shows a first embodiment of a retainer 1 according to the invention. Here, the retainer 1 is viewed from above. A cavity 10 is cut out of the body of the retainer 1, which can be of sheet metal. In this realization, the cavity 10 is suited for use with a hexagonal bolt part such as a bolthead or nut, and the shape of the cavity 10 is derived from a hexagonal perimeter shape P_{HEX}, which in turn is obtained by virtually enlarging the hexagonal outline of the bolt part. With the added crests 11 on each side face of the enlarged hexagon, the actual outline or profile of the cavity 10 which is punched or cut out of the sheet metal can be described as a "six-pointed star with rounded shallow points". A line segment L, corresponding to a side of a hexagon P_{HEX} on which the shape of the cavity 10 is based, and the inner contour of the cavity 10 demarcate an area 11 giving a crest 11 or 'bump' 11 extending into the cavity 10. Here, the crest 11 is symmetrical about a line bisecting the line segment L.

Fig. 4 shows a more detailed elevation view of a crest 11 in the cavity 10. As the diagram shows, the crest 11 extends along the depth of the cavity 10 in the retainer 1 in this realization. Here, the depth of the cavity 10 is shown in a somewhat exaggerated manner, but it will be clear to the skilled person that the retainer 1 can be made of relatively thin sheet metal.

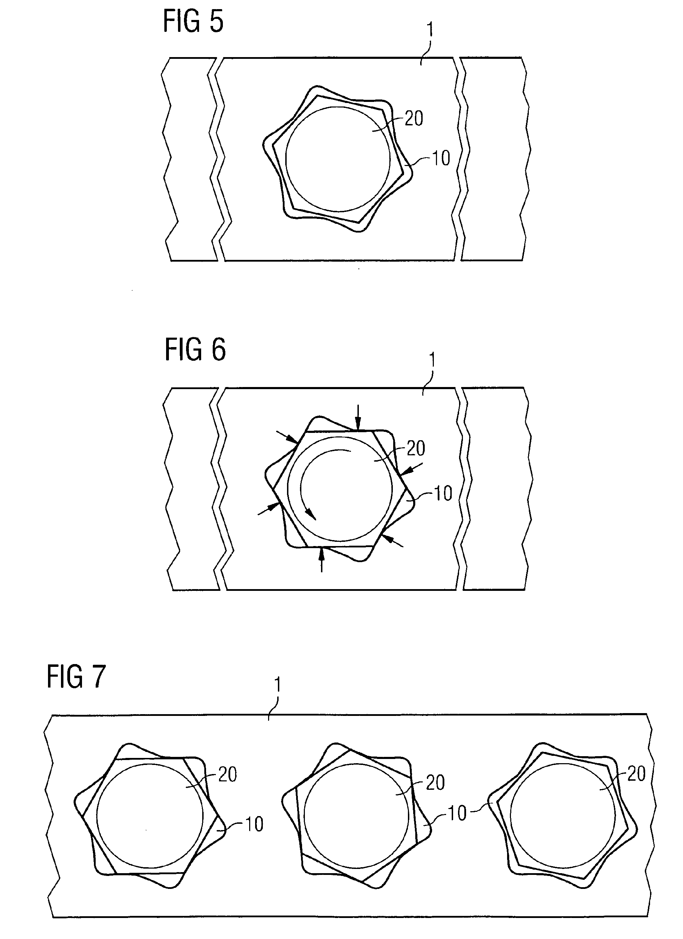

Fig. 5 shows the cavity 10 of Figs. 3 and 4 containing a bolthead 20 of a bolt, before tightening of the bolt. As the diagram shows, the shape and dimensions of the cavity 10 allow some degree of freedom in placing the cavity over the bolthead 20, unlike the prior art retainers of Figs. 1 and 2, which must be machined to ensure a tight fit for between bolthead. Fig. 6 shows the same bolthead of Fig. 5 after tightening of the bolt. Assuming the nut on the other end of the bolt has been tightened by turning it clockwise for a bolt with a right-hand thread, the bolthead will tend to turn in the same direction. Therefore, viewed from above in Fig. 5, the bolthead rotates in an anti-clockwise manner, and the forces exerted on the side faces of the bolthead 20 are as indicated by the arrows in the diagram, where the side faces of the bolthead 20 come into contact with the crests 11 on the side walls 12 of the cavity 10. Evidently, for a bolt with a left-hand thread, the bolthead 20 will turn in a clockwise direction when viewed from above the retainer 1, so that the side faces of the bolthead 20 will be pressed against the other sides of the crests 11.

Fig. 7 shows a second embodiment of the retainer 1 according to the invention, realized with a plurality of cavities 10 for constraining several bolt parts. As can be seen from the diagram, the bolt parts 20 can be positioned with a certain freedom before dropping the retainer 1 into place, i.e. the bolt parts 20 do not all need to be aligned at the same angle. Slight variations in bolt part placement still allow easy positioning of the retainer 1. While Fig. 7 shows the retainer 1 to be a straight metal strip, the retainer 1 could equally well have any appropriate shape, such as a curved shape to suit curved parts to be connected. For example, the retainer 1 could have a similar curvature to the prior-art retainer of Fig. 2, designed for connecting wind turbine tower sections.

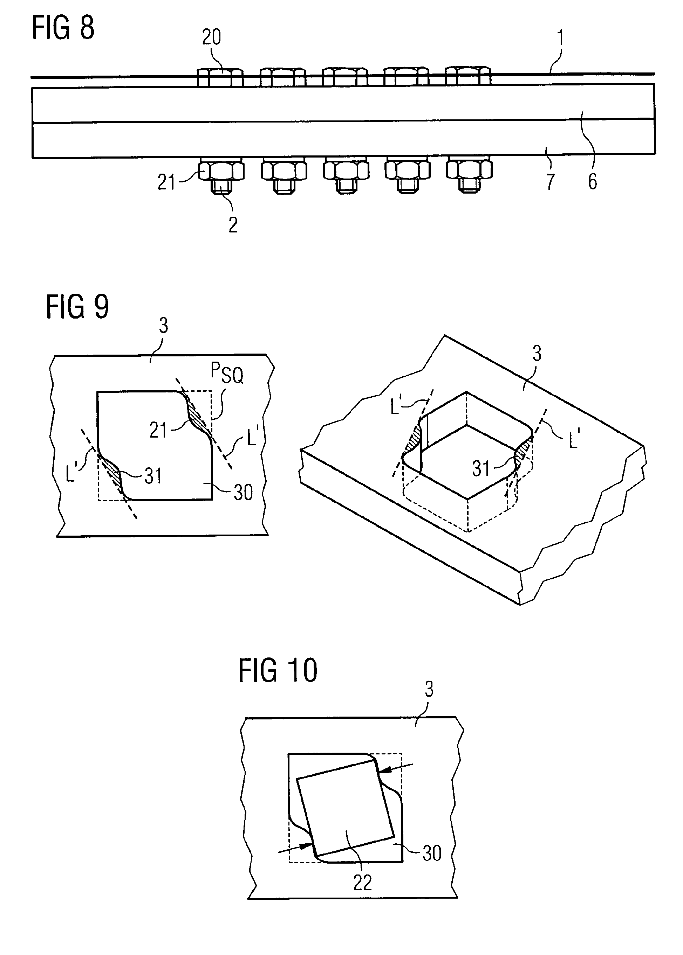

Fig. 8 gives a side view of the retainer 1 of Fig. 7, and shows the retainer 1 as a sheet metal strip with cavity cutouts placed over the boltheads 20 of a series of bolts 2. The bolts 2 extend through the parts 6, 7 to be connected, for example two flanges 6, 7. Nuts 21 screwed onto the ends of the bolts 2 can be turned to tighten the bolt connections. This diagram also clearly shows that the retainer 1 is much thinner than the prior art retainers of Fig. 1 and Fig. 2. Here, even though the retainer 1 is made of a relatively thin metal strip, the retaining action given by the contact areas between bolt part faces and crests is sufficient. While the retainer 1 is shown here to hold the boltheads 20 of the bolts 2 while the nuts 21 are being tightened, obviously the retainer 1 could equally well be applied to hold the nuts 21 while the boltheads 20 are turned.

Fig. 9 shows another embodiment of the retainer 3 according to the invention in a plan view and a side view in the upper part of the diagram. Here, the cavity 30 basically comprises a rectangular shape, but with only two crests 31 extending into the cavity 30 from opposite sides. This type of cavity 31 can be used to constrain a hexagonal bolt part 20 or a bolt part with a different shape, such as the square bolt part 22 as shown in Fig. 10. Here, the shape of the cavity 30 is based on a perimeter square P_{SQ} obtained by enlarging the shape of the square bolt part 22. Using this perimeter square as a basis, crests could be arranged on two or more sides of the square, analogous to the design of the cavity 10 of Fig. 3. In the realization shown here, the crests 31 are given by 'removing' two corners of the square P_{SQ} along the lines L' and then 'pushing' these inwards to give the rounded shape shown. Of course, the cavity 30 is actually made by a suitably shaped punch or in a thermal cutting process, as already described. In this realization, only two side faces of the bolt part 22 are pressed against the crests 31 of the cavity 30 when the bolt is tightened, as indicated by the arrows. For smaller bolts, or bolted connections that are not subject to high loads, two such face/face contacts may suffice.

Suitably shaped cavities can be realized for other bolthead or nut shapes. For example, a cavity with five crests could be realized for a bolt part with pentagonal shape. Equally, a cavity with one or more crests could be realized for a proprietary bolt part that has a shape other than the cyclic polygons considered above, for example an elliptical bolthead or nut.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements.

## Claims

1. A retainer (1, 3) for limiting the rotational movement of a bolt part (20, 21, 22) during tightening or loosening of a bolt (2), which bolt part (20, 22) comprises a bolthead or a nut, which retainer (1, 3) comprises a cavity (10, 30) dimensioned to accommodate the bolt part (20, 21, 22),
which cavity (10, 30) is **characterized by** side walls comprising a number of crests (11, 31) extending into the cavity (10, 30) and corresponding to side faces of the bolt part (20, 21, 22) such that the rotational movement of the bolt part (20, 21, 22) positioned in the cavity (10, 30) is limited by contact made between at least one side face of the bolt part (20, 21, 22) and a corresponding crest (11, 31) of the cavity (10, 30).

2. A retainer (1, 3) according to claim 1, wherein a cavity (10, 30) is dimensioned to accommodate a bolt part (20, 21, 22) with a polygonal shape.

3. A retainer (1) according to claim 2, wherein the cavity (10) is dimensioned to accommodate a hexagonal bolt part (20, 21).

4. A retainer (1, 3) according to any of the preceding claims, wherein the shape of the cavity (10, 30) is derived from an enlarged outline (P_{Hex}, P_{SQ}) of the bolt part (20, 21, 22).

5. A retainer (1, 3) according to any of the preceding claims, wherein a crest (11, 31) comprises a symmetrical shape.

6. A retainer (1, 3) according to any of the preceding claims, comprising a symmetrical arrangement of crests (11, 31) about the side walls of a cavity (10, 30).

7. A retainer (1, 3) according to any of the preceding claims, wherein a cavity (10, 30) and the crests (11, 31) on the cavity side walls are dimensioned to limit the rotational movement of a bolt part (20, 21, 22) to a maximum rotation of up to 8 degrees, more preferably up to 5 degrees, most preferably up to 3 degrees.

8. A retainer (1, 3) according to any of the preceding claims, comprising a plurality of cavities (10, 30) for accommodating a plurality of bolt parts (20, 21, 22).

9. A retainer (1, 3) according to any of the preceding claims, wherein the retainer (1, 3) is manufactured of sheet metal.

10. A retainer (1, 3) according to any of the preceding claims, wherein the cavity (1, 3) is formed by means of a punch or in a thermal cutting process.

11. A retainer (1, 3) according to any of the preceding claims, wherein the cavity (1, 3) is dimensioned to accommodate a construction industry bolt part (20, 21, 22) with a size of at least M20.

12. A method of limiting the rotational movement of a bolt part (20, 21, 22) during tightening or loosening of a bolt (2), which bolt part (20, 21, 22) comprises a bolthead or a nut, which method comprises retaining the bolt part (20, 21, 22) in a cavity (10, 30) of a retainer (1, 3) ,
which cavity (10, 30) is **characterized by** side walls comprising a number of crests (11, 31) extending into the cavity (10, 30) and corresponding to side faces of the bolt part (20, 21, 22) such that the rotational movement of the bolt part (20, 21, 22) positioned in the cavity (10, 30) is limited by contact made between at least one side face of the bolt part (20, 21, 22) and a corresponding crest (11, 31) of the cavity (10, 30).

13. A method of manufacturing a retainer (1, 3) according to any of claims 1 to 11 for limiting the rotational movement of a bolt part (20, 21, 22) during tightening or loosening of a bolt (2), which bolt part (20, 21, 22) comprises a bolthead (20, 22) or a nut (21), which method comprises processing a workpiece to create at least one cavity (10, 30) to accommodate a bolt part (20, 21, 22), which cavity (10, 30) is **characterized by** side walls comprising a number of crests (11, 31) extending into the cavity (10, 30) and corresponding to side faces of the bolt part (20, 21, 22) such that, when the bolt part (20, 21, 22) is contained in the cavity (10, 30) and the bolt (2) is tightened or loosened, the rotational movement of the bolt part (20, 21, 22) is limited by contact made between at least one side face of the bolt part (20, 21, 22) and a corresponding crest (11, 31) of the cavity (10, 30 ) .

14. Use of a retainer according to any of claims 1 to 11 for tightening or loosening a bolt (2) with a size of at least M20, preferably for connecting components for a wind turbine.
